# EUROPEAN PATENT APPLICATION

(11) **EP 3 534 256 A1**
(43) Date of publication of application: **04.09.2019**
(21) Application number: 19155779.2
(22) Date of filing: 06.02.2019
(51) Int. Cl.: G06F 9/50, G06F 9/445

(54) **EXECUTION OF SOFTWARE ON A REMOTE COMPUTING SYSTEM**

(30) Priority: 01.03.2018 US 201815909978
(71) Applicant: Hewlett Packard Enterprise Development L.P., Houston, TX 77070 (US)
(72) Inventor: Ranjan, Jyoti, 560048 Bangalore (IN); Budumuru, Ravichandra, 560048 Bangalore (IN)
(74) Representative: ZBM Patents - Zea, Barlocci & Markvardsen

(57) **Abstract**

Example implementations relate to executing software on a remote computing system. In an example, an apparatus includes a memory and a processor to execute instructions from the memory to provide software to a first storage medium, cause the remote storage medium to replicate the software to a second storage medium, and cause the remote computing system to retrieve the software from the second storage medium over a network and to execute the software. In an example, the second storage medium is closer to the remote computing system than the first storage medium.

## Description

### BACKGROUND

A remote computing system may be used by a user to execute software to perform a function. The remote computing system may be remote from the user, that is, located in a location that is accessible by over a network such as the internet. The user may provide the remote computing system with an executable code image that can be executed by the remote computing system to perform the function, such as providing a service.

Examples of a remote computing system may include a cloud computing system. A cloud computing system may offer a pool of shared computing resources that may be shared between one or more users.

### BRIEF DESCRIPTION OF DRAWINGS

Examples will now be described, by way of non-limiting example, with reference to the accompanying drawings, in which:
Figure 1A is a simplified schematic of an example of an apparatus for causing execution of software on a remote computing system;
Figure 1B is a simplified schematic of an example of an apparatus for causing execution of software on a remote computing system;
Figure 2A is a simplified schematic of an example of a system for execution of software on a remote computing system;
Figure 2B is a simplified schematic of an example of a system for execution of software on a remote computing system;
Figure 3 is a flow chart of an example of a method of configuring a cloud computing platform;
Figure 4 is a flow chart of an example of a method of configuring a cloud computing platform; and
Figure 5 is a simplified schematic of an example of a non-transitory machine-readable medium.

### DETAILED DESCRIPTION

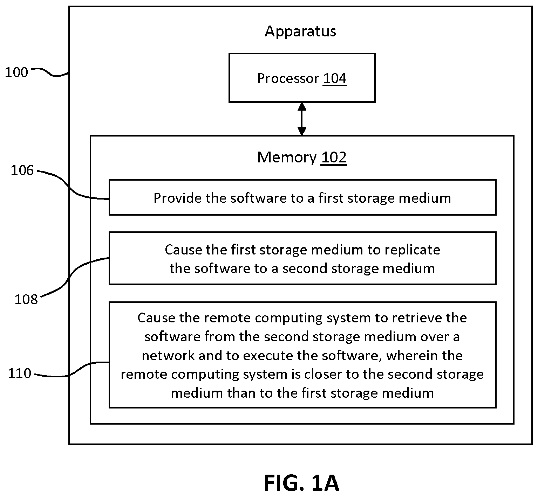

Figure 1A is a simplified schematic of an example of an apparatus 100, which may be for example an apparatus for causing execution of software on a remote computing system. In some examples, the apparatus 100 may be operated by a user of the remote computing system.

The apparatus 100 includes a memory 102 and a processor 104. The processor 104 is to execute instructions from the memory 102 to provide 106 the software to a first storage medium. The software may be any suitable form such that it can be executed by the remote computing system to perform a function or provide a service. The software may for example be in the form of an image. The software may in some examples include instructions that when executed perform the function or provide the service, and may also include an operating system. The software may in some examples provide a function such as for example processing of or calculations using data. The software may in some examples provide a service such as for example a web hosting platform.

The first storage medium may in some examples be local to a user, such as for example be located on the same premises, at the same geographic location, or accessible over a Local Area Network (LAN). In other examples, the first storage medium may be remote from the user, such as for example in a different geographic location or accessible over a Wide Area Network (WAN) or the internet.

The processor 104 of the apparatus 100 is also to execute instructions from the memory 102 to cause 108 the first storage medium to replicate the software to a second storage medium. For example, an instruction may be sent to the first storage medium, or to a provider of the first and second storage mediums, that a copy of the software should be transferred to and stored in the second storage medium from the first storage medium. In some examples, any changes to the software stored in the first storage medium are also replicated to the second storage medium.

The processor 104 of the apparatus 100 is also to execute instructions from the memory 102 to cause 110 the remote computing system to retrieve the software from the second storage medium over a network and to execute the software, wherein the remote computing system is closer to the second storage medium than to the first storage medium. The remote computing system therefore for example may retrieve the software more quickly than from the first storage medium, as the second storage medium is closer. As a result, execution of the software and hence provision of the service or performing of the function can take place sooner. In some examples, the remote computing system may include a virtual machine that executes the software.

In some examples, the remote computing system is physically or geographically closer to the second storage medium than to the first storage medium. That is, the location of the remote computing system is closer to the location of the second storage medium than to the fist storage medium. In other examples, the remote computing system may be closer in network terms to the second storage medium. For example, the length of a network path between the remote computing system and the second storage medium may be shorter than between the remote computing system and the first storage medium, the network path may have lower latency, or the network path may have fewer hops.

In some examples, the user (who provides the software for execution by the remote computing system) may be closer to the first storage location than to the second storage location. Therefore, the software may be delivered to the first storage location more quickly than it can be delivered to the second storage medium. Replication of the software to the second storage medium may in some examples take place between provision of the software by the user and execution of the software by the remote computing system, particularly for example where the user may not wish for immediate execution of the software.

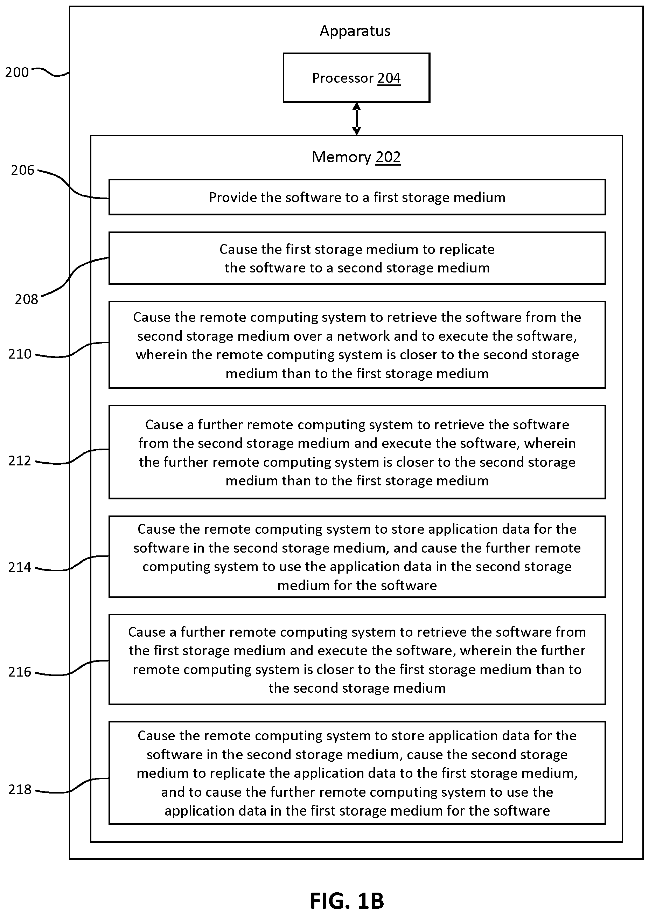

Figure 1B is a simplified schematic of an example of an apparatus 200, which may be for example an apparatus for causing execution of software on a remote computing system. In some examples, the apparatus 200 may be operated by a user of the remote computing system.

The apparatus 200 includes a memory 202 and a processor 204. The processor 204 is to execute instructions from the memory 202 to provide 206 the software to a first storage medium, cause 208 the first storage medium to replicate the software to a second storage medium, and cause 210 the remote computing system to retrieve the software from the second storage medium over a network and to execute the software, wherein the remote computing system is closer to the second storage medium than to the first storage medium. Blocks 206, 208 and 210 may in some examples be similar to blocks 106, 108 and 110 shown in Figure 1A.

The processor 204 is also to execute instructions from the memory 202 to cause 212 a further remote computing system to retrieve the software from the second storage medium and execute the software, wherein the further remote computing system is closer to the second storage medium than to the first storage medium. Therefore, for example, the user may not provide the software directly to the further remote computing system, and the further remote computing system may obtain the software more quickly from the second storage medium. In some examples, the provider of the remote computing system may be different to the provider of the further remote computing system. For example, the providers may be different providers or operators of cloud computing platforms that each offer a remote computing system within a cloud computing environment. In some examples, the processor 204 is to execute instructions from the memory 202 to cause the remote computing system to store 214 application data for the software in the second storage medium, and cause the further remote computing system to use the application data in the second storage medium for the software. This may occur for example if the user wishes to change the provider of remote computing services from the provider of the remote computing platform to the provider of the further remote computing platform. In this case, for example, the software may resume performing its function or providing its service upon execution within the further remote computing system by using the application data saved during execution by the previous remote computing system.

The further remote computing system may in some examples be closer to the first storage medium than to the second storage medium. The processor 204 is thus to execute instructions from the memory 202 to cause 216 a further remote computing system to retrieve the software from the first storage medium and execute the software, wherein the further remote computing system is closer to the first storage medium than to the second storage medium. In some examples, the further remote computing system may be able to obtain the software from the first storage medium more quickly than from the second storage medium and/or the user. Thus, the further remote computing system may be able to begin execution of the software more quickly. In some examples, the processor 204 is to execute instructions from the memory 202 to cause the remote computing system to store application data for the software in the second storage medium, cause the second storage medium to replicate the application data to the first storage medium, and to cause the further remote computing system to use the application data in the first storage medium for the software. For example, if the user wishes to change the provider of remote computing services, the user may send an instruction to the second storage medium, or to the provider of the first and second storage mediums, to replicate the application data to the first storage medium. Thus the software may resume its function or service using the application data in the first storage medium upon execution by the further remote computing system.

In some examples, the further remote computing system may be located in a new geographic area, that is, in an area remote from the first and second storage mediums and the remote computing system. In this case, the first or second storage medium, or a provider of the first and second storage mediums, may be instructed to replicate the software to a third storage medium, wherein the further remote computing system may be closer to the third storage medium than to the first or second storage medium. The further remote computing system may then be caused (e.g. instructed) to obtain the software from the third storage medium and execute the software.

In some examples, provision of the software to the first storage medium, and/or any replication of software or data between the first and second storage mediums, may occur over a network such as the internet.

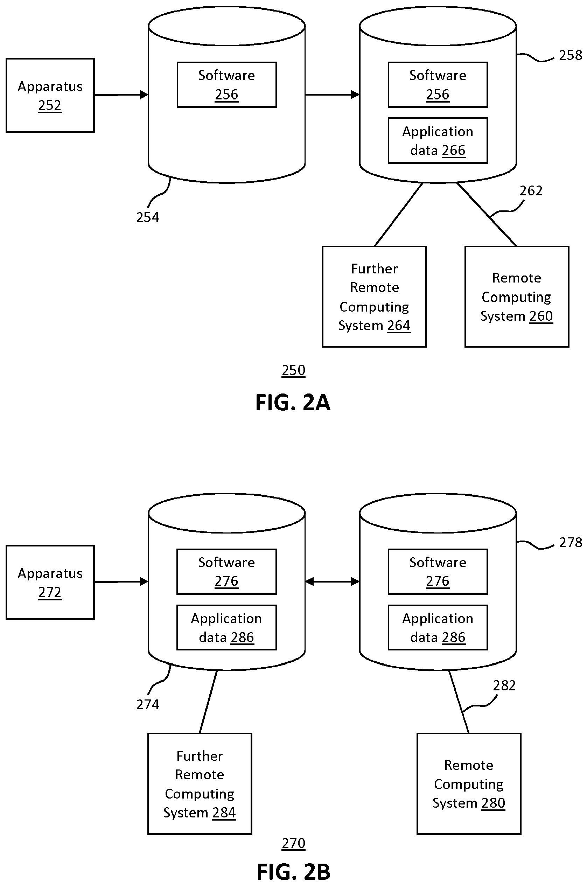

Figure 2A is a simplified schematic of an example of a system 250, for example a system for execution of software on a remote computing system. The system 250 includes an apparatus 252, which may be for example an apparatus for causing execution of software on a remote computing system. The apparatus 252 is in communication with a first storage medium 254, and the apparatus 252 may provide software 256 to the first storage medium 254. The apparatus 252 may also cause the first storage medium to replicate the software 256 to a second storage medium 258. The apparatus 252 may also cause a remote computing system 260 to retrieve the software from the second storage medium 258 over a network 262 and to execute the software, wherein the remote computing system 260 is closer to the second storage medium 258 than to the first storage medium 254.

In some examples, the apparatus 252 is also to cause a further remote computing system 264 to retrieve the software 256 from the second storage medium 258 (e.g. over the same network 262, or a different network) and execute the software 256, wherein the further remote computing system 264 is closer to the second storage medium 258 than to the first storage medium 254. The apparatus 252 is also to cause the remote computing system 260 to store application data 266 for the software in the second storage medium 258, and cause the further remote computing system 264 to use the application data 266 in the second storage medium 258 for the software 256 (e.g. while it is being executed on the further remote computing system 264).

Figure 2B is a simplified schematic of an example of a system 270, for example a system for execution of software on a remote computing system. The system 270 includes an apparatus 272, which may be for example an apparatus for causing execution of software on a remote computing system. The apparatus 272 is in communication with a first storage medium 274, and the apparatus 272 may provide software 276 to the first storage medium 274. The apparatus 272 may also cause the first storage medium to replicate the software 276 to a second storage medium 278. The apparatus 272 may also cause a remote computing system 280 to retrieve the software 276 from the second storage medium 278 over a network 282 and to execute the software 276, wherein the remote computing system 280 is closer to the second storage medium 278 than to the first storage medium 274.

In some examples, the apparatus 272 is also to cause a further remote computing system 284 to retrieve the software 276 from the first storage medium 258 (e.g. over the same network 282, or a different network) and execute the software 276, wherein the further remote computing system 284 is closer to the first storage medium 274 than to the second storage medium 278. The apparatus 272 is also to cause the remote computing system 280 to store application data 286 for the software 276 in the second storage medium 278, cause the second storage medium 278 to replicate the application data 286 to the first storage medium 274, and to cause the further remote computing system 284 to use the application data 286 in the first storage medium 274 for the software 276 (e.g. during execution of the software 276).

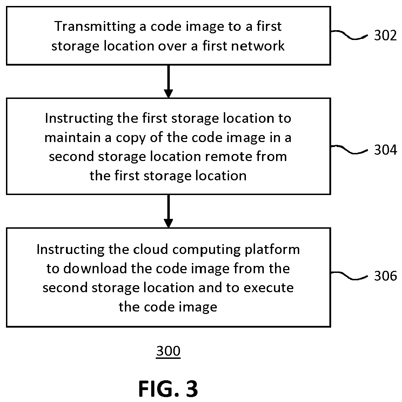

Figure 3 is a flow chart of an example of a method 300 of configuring a cloud computing platform. For example, the cloud computing platform may be configured to perform a function such as data processing, or to provide a service. The method 300 includes, in block 302, transmitting a code image to a first storage location over a first network. The code image may include code that is executable by the cloud computing platform to perform a function or to provide a service. The first network may be, for example, a LAN, WAN, internet or other network.

Block 304 of the method 300 comprises instructing the first storage location to maintain a copy of the code image in a second storage location remote from the first storage location. The first storage location, or an operator of the first and second storage locations, may provide such a facility. The second storage location may for example be chosen to be closer to the cloud computing platform than the first storage location. Block 306 of the method 300 comprises instructing the cloud computing platform to download the code image from the second storage location and to execute the code image. The cloud computing platform may be able to download the code image at a higher rate from the second storage location than from the first storage location and/or the user, and thus execute the code image sooner.

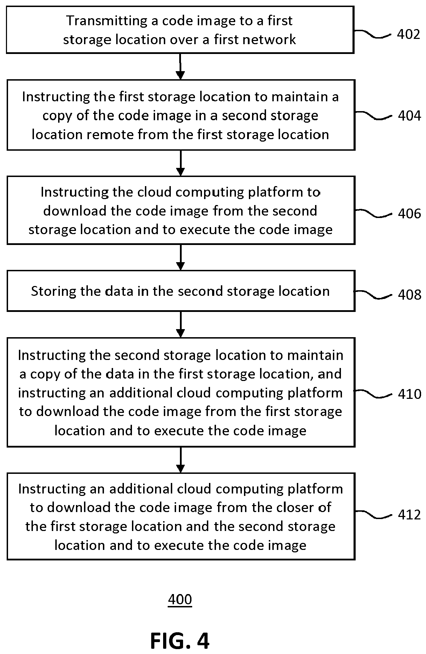

Figure 4 is a flow chart of an example of a method 300 of configuring a cloud computing platform. For example, the cloud computing platform may be configured to perform a function such as data processing, or to provide a service. The method 400 includes, in block 402, transmitting a code image to a first storage location over a first network, in block 404, instructing the first storage location to maintain a copy of the code image in a second storage location remote from the first storage location, and in block 406, instructing the cloud computing platform to download the code image from the second storage location and to execute the code image. In some examples, the block 402, 404 and 406 may be similar to blocks 302, 304 and 306 shown in Figure 3.

In some examples, a distance between the cloud computing platform and the second storage location is less than a distance between the cloud computing platform and the first storage location. Thus the cloud computing platform may be able to obtain the code image more quickly from the second storage location than from the first storage location.

In some examples, the code image uses data during execution of the code image by the cloud computing platform. The method comprises, in block 408, storing the data in the second storage location, and in block 410, instructing the second storage location to maintain a copy of the data in the first storage location, and instructing an additional cloud computing platform to download the code image from the first storage location and to execute the code image. The code image may use the data stored in the first storage location during execution of the code image by the additional cloud computing platform. Therefore, for example, when a provider of cloud computing services changes from a provider of the cloud computing platform to a provider of the additional cloud computing platform, the code image may resume execution in the additional cloud computing platform using data that was saved in the second storage location, which was also maintained (e.g. replicated) in the first storage location. In some examples, the cloud computing platform and the additional cloud computing platform may both execute the code image simultaneously.

Block 412 of the method 400 comprises instructing an additional cloud computing platform to download the code image from the closer of the first storage location and the second storage location and to execute the code image. Thus a user may not provide the code image directly to the additional cloud computing platform. Obtaining the code image from the closer of the storage locations may allow the additional cloud computing platform to obtain the code image more quickly.

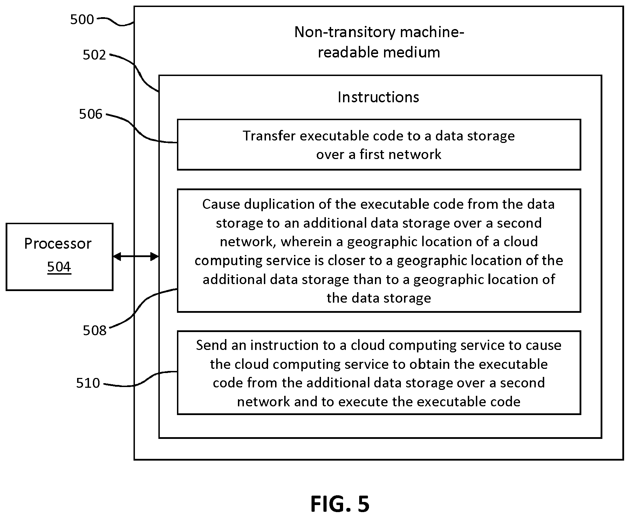

Figure 5 is a simplified schematic of an example of a non-transitory machine-readable medium 500 comprising instructions 502 that, when executed by a processor 504, cause the processor 504 to transfer 506 executable code to a data storage over a first network, cause 508 duplication of the executable code from the data storage to an additional data storage over a second network, wherein a geographic location of a cloud computing service is closer to a geographic location of the additional data storage than to a geographic location of the data storage, and send 510 an instruction to a cloud computing service to cause the cloud computing service to obtain the executable code from the additional data storage over a second network and to execute the executable code.

In some examples, the executable code may be transferred to the data storage over the internet, for example from a user. Thus the first network comprises or includes the internet. In some examples, additionally or alternatively, the second network comprises or includes the internet.

Duplication of the executable code may be caused by sending an instruction to the data storage, or to a provider or operator of the data storage and the additional data storage.

In some examples, the non-transitory machine-readable medium 500 comprises instructions 502 that, when executed by the processor 504, cause the processor 504 to send an instruction to a second cloud computing service to cause the second cloud computing service to obtain the executable code from the data storage if the second cloud computing service is closer to the geographic location of the data storage than to the geographic location of the additional data storage, or send an instruction to the second cloud computing service to cause the second cloud computing service to obtain the executable code from the additional data storage if the second cloud computing service is closer to the geographic location of the additional data storage than to the geographic location of the data storage. Thus, for example, the second cloud computing service may obtain the executable code from an appropriate location, such as a geographically closest data storage. In some examples, the non-transitory machine-readable medium 500 may additionally comprise instructions 502 that, when executed by the processor 504, cause the processor 504 to send an instruction to the cloud computing service to cause the cloud computing service to store data files accessed by the executable code during execution by the cloud computing service in the additional data storage. Additionally, the instructions 502 may cause the processor 504 to send an instruction to the second cloud computing service to cause the second cloud computing service to provide the data files in the additional data storage for access by the executable code during execution by the second cloud computing service if the second cloud computing service is closer to the geographic location of the additional data storage than to the geographic location of the data storage, or send an instruction to the second cloud computing service to cause the second cloud computing service to provide the data files in the data storage for access by the executable code during execution by the second cloud computing service if the second cloud computing service is closer to the geographic location of the data storage than to the geographic location of the additional data storage. Thus the second cloud computing service may for example begin to execute the executable code using the data files, and may thus for example resume execution of the executable code using a state for the executable code from the first cloud computing service. Where the second cloud computing service obtains the data files from the data storage rather than from the additional data storage, the data storage may be instructed or controlled to store a copy of the data files from the additional data storage.

In some examples, the non-transitory machine-readable medium 500 comprises instructions 502 that, when executed by the processor 504, cause the processor 504 to cause duplication of the executable code from the data storage to the additional data storage by sending an instruction to a provider of the data storage and the additional data storage to maintain a copy of the executable code in the additional data storage. This facility may be provided by a data storage operator or provider, and may cause for example the provider to replicate the executable code to the additional data storage, including any changes made to the executable code in the data storage.

In some examples the additional data storage may be chosen to be in a geographic location that is close to the second cloud computing platform. The location of the cloud computing platform may itself be chosen to provide a function or service (due to execution of the executable code) at or near to that location. Thus in some examples, distribution of the executable code to one or more storage locations may be performed prior to causing one or more cloud computing platforms near to the respective storage locations to obtain the executable code from the nearby storage location and begin executing it.

Examples in the present disclosure can be provided as methods, systems or machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. It shall be understood that each flow and/or block in the flow charts and/or block diagrams, as well as combinations of the flows and/or diagrams in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. It is intended, therefore, that the method, apparatus and related aspects be limited only by the scope of the following claims and their equivalents. It should be noted that the above-mentioned examples illustrate rather than limit what is described herein, and that those skilled in the art will be able to design many alternative implementations without departing from the scope of the appended claims.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. Apparatus for causing execution of software on a remote computing system, the apparatus comprising:
a memory;
a processor to execute instructions from the memory to:
provide the software to a first storage medium;
cause the first storage medium to replicate the software to a second storage medium; and
cause the remote computing system to retrieve the software from the second storage medium over a network and to execute the software, wherein the remote computing system is closer to the second storage medium than to the first storage medium.

2. The apparatus of claim 1, wherein the processor is to execute instructions from the memory to cause a further remote computing system to retrieve the software from the second storage medium and execute the software, wherein the further remote computing system is closer to the second storage medium than to the first storage medium.

3. The apparatus of claim 2, wherein the processor is to execute instructions from the memory to cause the remote computing system to store application data for the software in the second storage medium, and cause the further remote computing system to use the application data in the second storage medium for the software.

4. The apparatus of claim 1, wherein the processor is to execute instructions from the memory to cause a further remote computing system to retrieve the software from the first storage medium and execute the software, wherein the further remote computing system is closer to the first storage medium than to the second storage medium.

5. The apparatus of claim 4, wherein the processor is to execute instructions from the memory to cause the remote computing system to store application data for the software in the second storage medium, cause the second storage medium to replicate the application data to the first storage medium, and to cause the further remote computing system to use the application data in the first storage medium for the software.

6. A method of configuring a cloud computing platform, the method comprising:
transmitting a code image to a first storage location over a first network;
instructing the first storage location to maintain a copy of the code image in a second storage location remote from the first storage location; and
instructing the cloud computing platform to download the code image from the second storage location and to execute the code image.

7. The method of claim 6, wherein a distance between the cloud computing platform and the second storage location is less than a distance between the cloud computing platform and the first storage location.

8. The method of claim 6, wherein the code image uses data during execution of the code image by the cloud computing platform, and the method comprises storing the data in the second storage location.

9. The method of claim 8, further comprising instructing the second storage location to maintain a copy of the data in the first storage location; and
instructing an additional cloud computing platform to download the code image from the first storage location and to execute the code image;
wherein the code image uses the data stored in the first storage location during execution of the code image by the additional cloud computing platform.

10. The method of claim 6, further comprising instructing an additional cloud computing platform to download the code image from the closer of the first storage location and the second storage location and to execute the code image.

11. A non-transitory machine-readable medium comprising instructions that, when executed by a processor, cause the processor to:
transfer executable code to a data storage over a first network;
cause duplication of the executable code from the data storage to an additional data storage over a second network, wherein a geographic location of a cloud computing service is closer to a geographic location of the additional data storage than to a geographic location of the data storage; and
send an instruction to the cloud computing service to cause the cloud computing service to obtain the executable code from the additional data storage over the second network and to execute the executable code.

12. The non-transitory machine-readable medium of claim 11, comprising instructions that, when executed by a processor, cause the processor to:
send an instruction to a second cloud computing service to cause the second cloud computing service to obtain the executable code from the data storage if the second cloud computing service is closer to the geographic location of the data storage than to the geographic location of the additional data storage.

13. The non-transitory machine-readable medium of claim 11, comprising instructions that, when executed by a processor, cause the processor to:
send an instruction to a second cloud computing service to cause the second cloud computing service to obtain the executable code from the additional data storage if the second cloud computing service is closer to the geographic location of the additional data storage than to the geographic location of the data storage;
send an instruction to the cloud computing service to cause the cloud computing service to store data files accessed by the executable code during execution by the cloud computing service in the additional data storage; and
send an instruction to the second cloud computing service to cause the second cloud computing service to provide the data files in the additional data storage for access by the executable code during execution by the second cloud computing service if the second cloud computing service is closer to the geographic location of the additional data storage than to the geographic location of the data storage.

14. The non-transitory machine-readable medium of claim 12, comprising instructions that, when executed by a processor, cause the processor to:
send an instruction to the cloud computing service to cause the cloud computing service to store data files accessed by the executable code during execution by the cloud computing service in the additional data storage; and
send an instruction to the second cloud computing service to cause the second cloud computing service to provide the data files in the data storage for access by the executable code during execution by the second cloud computing service if the second cloud computing service is closer to the geographic location of the data storage than to the geographic location of the additional data storage.

15. The non-transitory machine-readable medium of claim 11, comprising instructions that, when executed by a processor, cause the processor to cause duplication of the executable code from the data storage to the additional data storage by sending an instruction to a provider of the data storage and the additional data storage to maintain a copy of the executable code in the additional data storage.
